# EUROPEAN PATENT SPECIFICATION

(11) **EP 2 704 865 B1**
(45) Date of publication and mention of the grant of the patent: **19.09.2018**
(21) Application number: 12722240.4
(22) Date of filing: 07.05.2012
(51) Int. Cl.: B23B 51/00, B23B 51/02

(54) **MASONRY DRILL BIT**
MAUERBOHRSPITZE
FORET DE MAÇONNERIE

(30) Priority: 06.05.2011 DE 202011100380 U
(43) Date of publication of application: 12.03.2014
(60) Divisional application: 16158853.8
(73) Proprietor: Heller Tools GmbH, 49413 Dinklage (DE)
(72) Inventor: LAMPE, Rainer, 22117 Hamburg (DE); KERSTEN, Heinrich, 27283 Verden (DE)
(74) Representative: Gottschald, Jan
(86) International application number: PCT/US2012/036730
(87) International publication number: WO 2012/154644

(56) References cited:
- EP-A2- 0 965 405
- WO-A1-99/50014
- DE-A1- 2 152 127
- DE-U1-202008 017 395
- US-A1- 2002 053 473
- US-B1- 6 283 232
- US-B1- 6 446 741

## Description

The invention relates to a masonry drill bit as per the preamble of claim 1, an example of such a masonry drill bit is disclosed by DE 2 152 127 A.

The masonry drill bit in question is suitable for drilling into concrete or reinforced concrete, but also into other masonry, rock or the like. The masonry drill bit in question is usually equipped with an insertion portion, a helix adjoining the insertion portion and a head portion adjoining the helix.

Essential criteria for the design of masonry drill bits of the kind in question are easy centering, the achievable drilling progress per time unit, the high period of use and not least the low degree of wear.

The known masonry drill bit (DE 199 44 406 C2), on which the present invention it based, is equipped with a cutting insert having a substantially roof-shaped configuration. On both sides of the longitudinal axis of the drill bit there extend two main cutting edges which are each formed by a leading rake face and by a trailing flank adjoining the rake face. The main cutting edges merge into a transverse cutting edge in the central region of the drill head. What is interesting in this case is the fact that the transverse cutting edge is formed in a concave manner as seen from the side. This type of chisel edge is also known as a "point-thinned chisel edge".

Surprisingly, the centering action of the above known masonry drill bit having a point-thinned chisel edge is extraordinarily good. On account of the fact that there is virtually no obstructing lip in the center of the drill bit, the known masonry drill bit also has advantages with regard to the achievable drilling progress per time unit. The fact that the transverse cutting edge has, on account of its concave form, two axially protruding transverse cutting tips which lead to a corresponding concentration of force during drilling operation, also plays a particularly important role for the achievable drilling progress.

The invention is based on the problem of configuring and developing the known masonry drill bit such that the achievable drilling progress is further improved, in particular when reinforced material is drilled.

The above problem is solved by the features of claim 1.

What is essential is the knowledge that the applicability of the principle of "point-thinned chisel edges" does not have to be limited to the main cutting edges. Rather, this principle can also be applied to regions of the masonry drill bit which are located to the side of the transverse cutting edge and/or of the main cutting edges.

Specifically, it is proposed that the transverse cutting edge is formed by two adjacent channels and that each transverse cutting tip is adjoined by two webs which provide the lateral boundaries of the channels by forming additional edges. Thus, each channel has two lateral webs, specifically a leading web and a trailing web, in each case with regard to the direction of rotation of the masonry drill bit.

The expression "additional edges" should be understood here as meaning that the webs are not a constituent part of the main cutting edge or of the transverse cutting edge, but rather are expressly formed in addition to the above edges.

According to the proposal, it is provided that the transverse cutting tips effectively continue in the abovementioned webs, while the transverse cutting edge continues in the two channels. A longitudinal section in the region of the two channels thus always results substantially in the form of a point-thinned chisel edge. As a result, the above-discussed concentration of force on account of the point-thinned chisel edge can be extended to the regions to the sides of the chisel edge. The principle of the point-thinned chisel edge has effectively been extended to an additional dimension.

In the particularly preferred refinements according to claims 7 and 8, it is provided that the trailing web has less of a cutting action than the leading web, since the trailing web is set back with regard to possible cutting engagement. The idea here is to improve the centering action of the masonry drill bit by way of the above setting back of the trailing web. Thus, a reduction in the cutting action of the trailing web is effectively accepted.

In the further preferred refinements according to claim 9, it is provided that there are provided at least two auxiliary cutting edges, which each extend along an auxiliary cutting axis and which are each arranged at an angle to a main cutting axis.

The invention is explained in more detail in the following text on the basis of a drawing which illustrates only one exemplary embodiment and in which:

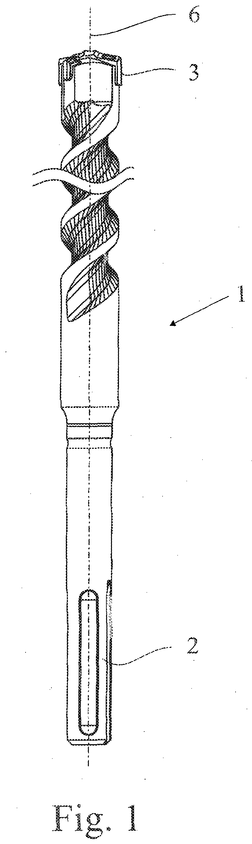

- figure 1: shows a side view of an exemplary embodiment of a masonry drill bit according to the proposal,
- figure 2: shows a perspective view of the drill head of the masonry drill bit according to figure 1,
- figure 3: shows a plan view of the drill head of the masonry drill bit according to figure 1,
- figure 4: shows a perspective view of the cutting insert, having the main cutting edges, of the masonry drill bit according to figure 1 in the detached state, and
- figure 5: shows a perspective view of the cutting insert, having the auxiliary cutting edge, of the masonry drill bit according to figure 1 in the detached state.

The masonry drill bit according to the proposal and illustrated in the drawing has a shank 1 having an insertion end 2 and a drill head 3 at the end of the shank 1 remote from the insertion end 2.

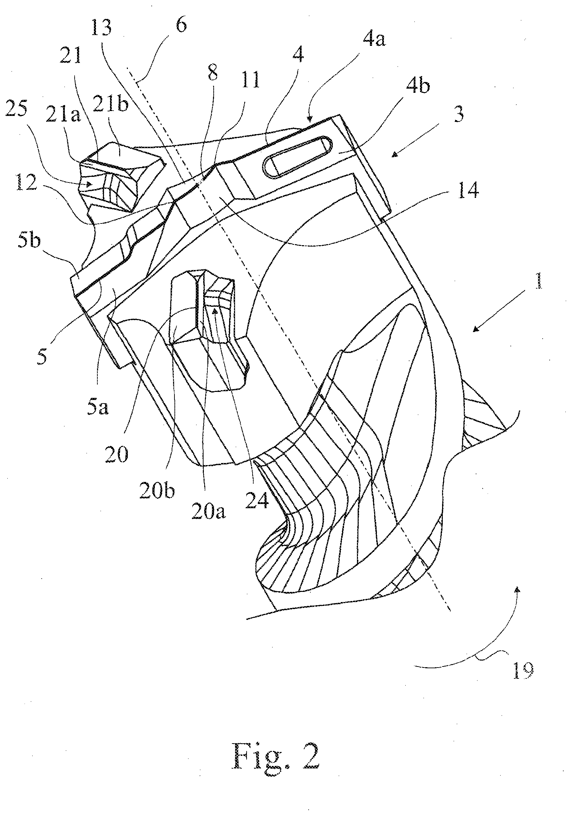

Figures 2 to 4 show that the drill head 3 has two main cutting edges 4, 5, which extend on both sides of the longitudinal axis 6 of the drill bit, here and preferably substantially along a main cutting axis 7. The main cutting edges 4, 5 can also be oriented in an inclined manner with respect to one another as seen from above. Here, the expression "as seen from above" always means the viewing direction toward the drill head 3 in the direction of the insertion end 2.

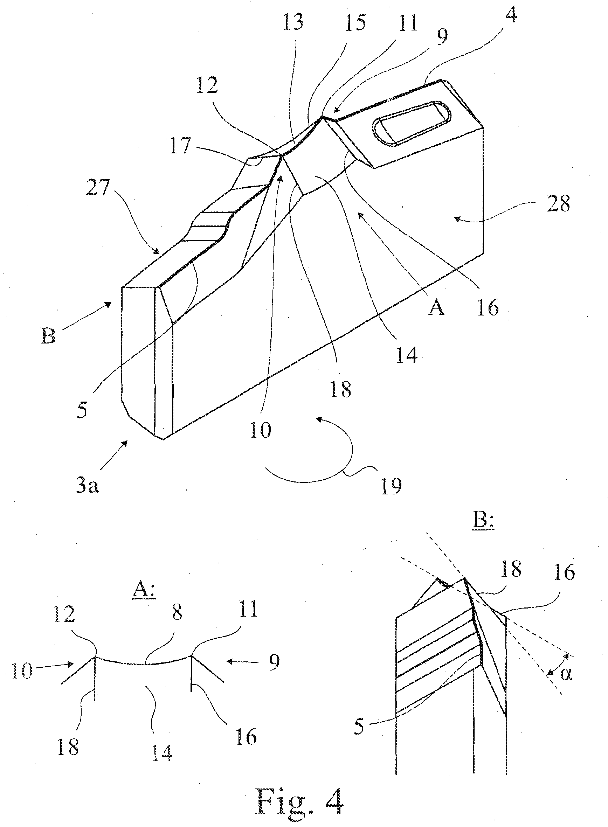

The specific realization of the main cutting edges 4, 5 plays only a subordinate role for the solution according to the proposal. This also applies for a step (figures 2 and 4) realized in the main cutting edge 5, said step not being discussed further here. In principle, it is also possible to provide more than two main cutting edges 4, 5 here.

The main cutting edges 4, 5 are each formed by a leading rake face 4a, 5a and by a trailing flank 4b, 5b adjoining the rake face 4a, 5a. In this case, the main cutting edges 4, 5 each converge toward a transverse cutting edge 8 arranged in the central region of the drill head 3.

The transverse cutting edge 8 is formed in a substantially concave manner as seen from the side (figure 4, view A). The expression "substantially concave" means that it does not necessarily have to be a curved, concave form here. Rather, it is conceivable for a concave form to be merely approximated, for example by a succession of linear sections.

The transverse cutting edge 8 is bounded by two transverse cutting ends 9, 10, which have two axially protruding transverse cutting tips 11, 12.

In the exemplary embodiment illustrated and to this extent preferred, the transverse cutting tips 11, 12 have an identical axial height. However, it is also conceivable in principle for the axial height of the two transverse cutting tips 11, 12 to be different.

What is essential now is that the transverse cutting edge 8 is formed by two adjacent channels 13, 14 and that each transverse cutting tip 11, 12 is adjoined by two webs 15-18. In the exemplary embodiment illustrated, the webs 15, 16 adjoin the transverse cutting tip 11 and the webs 17, 18 adjoin the transverse cutting tip 12.

It can be seen most clearly from the illustration according to figure 4 that the webs 15-18 form edges which are provided in the above sense in addition to the main cutting edges 4, 5 and the transverse cutting edge 8. Figure 4 also shows that the webs 15-18 provide the lateral boundaries of the channels 13, 14 by the formation of these additional edges. As a result, each channel 13, 14 has a leading web 16, 17 and a trailing web 15, 18 with respect to the direction of rotation of the masonry drill bit. The direction of rotation of the illustrated masonry drill bit has been provided with the reference sign 19 in figures 2-4.

The channels 13, 14 extend in a substantially straight manner.

The same applies to the webs 15-18. The webs 15-18 are configured in a substantially straight manner at least in the region close to the tips.

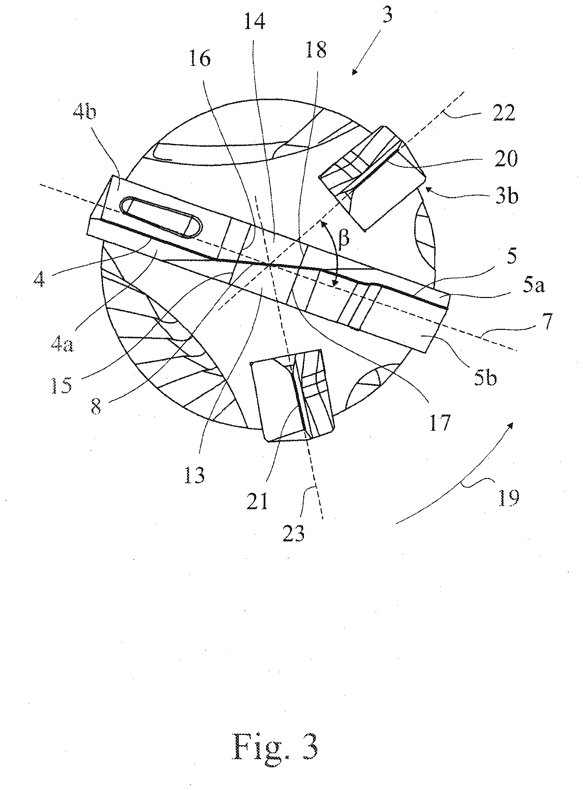

Figure 3 shows that the main cutting edges 4, 5 in the exemplary embodiment illustrated extend substantially along the main cutting axis 7, with the channels 13, 14 extending substantially transversely to the main cutting axis 7. This is interesting especially with regard to the cutting action of the webs 15-18, which is still to be explained.

As can be seen from looking at figures 2-4 together, not only the webs 15-18 but also the main cutting edges 4, 5 adjoin the transverse cutting tips 11, 12, such that a continuous cutting edge profile is produced between the two main cutting edges 4, 5 via the transverse cutting edge 8.

In the transverse cutting tips 11, 12, the angles between the main cutting edge 4, 5 and the web 15-18 are each preferably in a range between 60° and 120°.

In a particularly preferred refinement, as seen from above, the two webs 15, 16 and 17, 18 respectively adjoining a transverse cutting tip 11, 12 extend substantially in opposite directions. Here and preferably, the webs 15, 16 and 17, 18 in question even lie on a line, as seen from above. Alternatively or in addition, it is provided that, as seen from above, the two webs 15, 17 and 16, 18 of a channel 13, 14 are oriented substantially parallel to one another.

In order to be able to ensure the above-discussed concentration of force along the webs 15-18, it is advantageously provided that the channels 13, 14 are formed in a substantially concave manner in cross section (figure 4, view A). The term "concave" should be interpreted broadly, as discussed above.

In certain areas of application, it may suffice for the transverse cutting tips 11, 12 to be configured in a mound-like manner. However, here and preferably, the transverse cutting tips 11, 12 are each configured in a pointed manner in order to achieve a maximum concentration of force. In this case, the rounding radius in the transverse cutting tips 11, 12 is less than about 0.9 mm and is more preferably between about 0.1 mm and about 0.9 mm.

In a corresponding manner, it is further preferably provided that the webs 15-18 are configured in a substantially tapering manner as seen in cross section. Specifically, in cross section, the rounding radius in the webs 15-28 is preferably under about 0.9 mm, further preferably between about 0.1 mm and about 0.9 mm.

The webs 15-18 having the resulting additional edges allow a particularly good disintegration action during hammer drilling on account of the high concentration of force along the webs 15-18. However, in addition, it can also be provided that at least one of the two webs 15-18 of a channel 13, 14 is formed as a secondary cutting edge. In the present case, the leading web 16, 17 of the channels 13, 14 is formed as a secondary cutting edge. This means firstly that in any case these webs 16, 17 are formed in a correspondingly tapering manner in cross section.

In order to support the action of the leading webs 16, 17 as secondary cutting edges, it is further preferably provided that the two webs 15-18 of a channel 13, 14 are set in relation to one another.

Preferably, the setting angle α is in the range between about 10° and about 30°. Here and preferably, the setting angle is about 20°. In a particularly preferred refinement, the two webs 15, 17 and 16, 18 of a channel 13, 14 are set in relation to one another such that the trailing web 15, 18 is located at least in part closer to the longitudinal axis 6 of the drill bit than the respectively leading web 16, 17. Further preferably, the two webs 15, 17 and 16, 18 are set substantially only in one pivoting dimension in relation to one another, specifically about a pivot axis which is preferably oriented substantially parallel to the main cutting axis 7 or to the transverse cutting edge 8.

Advantageously, the trailing web 15, 18 is arranged with respect to the leading web 16, 17 of a channel 13, 14 such that the envelope of the movement of the trailing web 15, 18 is located at least in part, preferably substantially, within the envelope of the movement of the leading web 16, 17.

The solution according to the proposal can be applied to any conceivable masonry drill bits. In the exemplary embodiment illustrated and to this extent preferred, the masonry drill bit is equipped with two auxiliary cutting edges 20, 21, which each extend along an auxiliary cutting axis 22, 23. In principle, more than two auxiliary cutting edges 20, 21 can also be provided here. In a particularly preferred refinement, the auxiliary cutting axes 22, 23 each extend through the longitudinal axis 6 of the drill bit. However, it may also be advantageous for the auxiliary cutting edges 20, 21 to run past the longitudinal axis 6 of the drill bit.

Figure 3 shows that the auxiliary cutting edges 20, 21 are oriented substantially symmetrically with respect to the main cutting axis 7. In this case, the angle β between the respective auxiliary cutting axis 22, 23 and the main cutting axis 7 is between about 50° and about 70°. In principle, it is also possible to deviate from the symmetrical arrangement of the auxiliary cutting edges 20, 21.

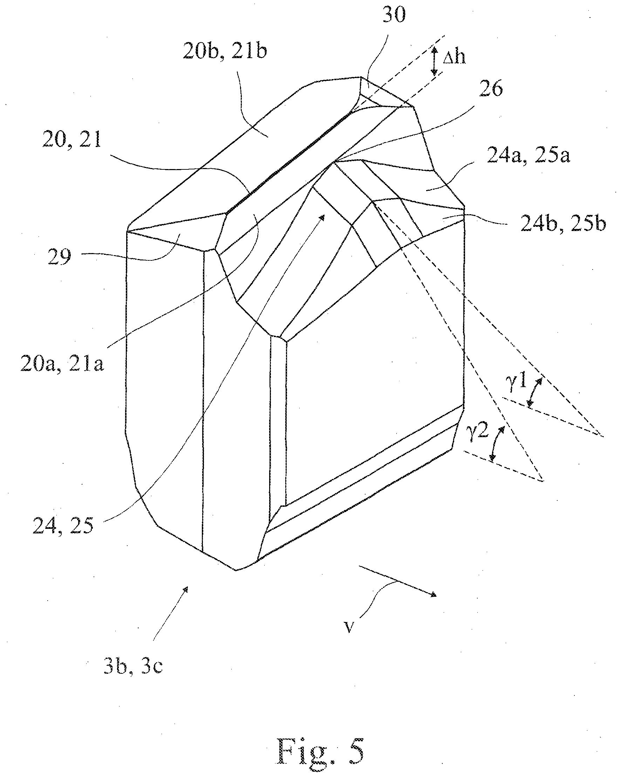

What is particularly interesting in the exemplary embodiment illustrated and to this extent preferred is the fact that each auxiliary cutting edge 20, 21 is formed by a leading rake face 20a, 21a and by a trailing flank 20b, 21b adjoining the rake face 20a, 21a. Figure 5 shows an insert element as such, which is inserted here in duplicate in an identical form into the drill head 3 to realize the auxiliary cutting edges 20, 21.

A leading ramp 24, 25 with respect to the rake face 20a, 21a is provided, said ramp 24, 25 rising axially toward the rake face 20a, 21a with regard to the longitudinal axis 6 of the drill bit. The resulting ramp angle γ is shown in figure 5. The ramp angle γ is preferably in a range between about 20° and about 60°. In this case, the movement vector v for the auxiliary cutting edge 20, 21 provides the reference direction for the respective ramp angle γ.

In the exemplary embodiment illustrated and to this extent preferred, the ramp 24, 25 has different ramp angles γ₁ and γ₂. Specifically, the ramp angle γ decreases toward the rake face 20a, 21a. For this purpose, the ramp 24, 25 has at least two, preferably exactly two, ramp regions 24a, 24b, 25a, 25b arranged in succession, wherein the ramp angle γ₂ in the leading ramp region 24b, 25b is greater than the ramp angle γ₁ in the trailing ramp region 24a, 25a. By way of the flattened portion, provided here in two steps, of the ramp angle γ, it is possible for the trailing ramp region 24a, 25a to be as wide as possible in the movement direction v, such that an optimal support for the cutting edge 20, 21 is produced. By way of the steeper, leading ramp region 24b, 25b, the remaining height difference dependent on the respective constructive boundary conditions can be bridged. It may be noted that more than two above ramp regions 24a, 24b, 25a, 25b can also be provided. It may also be noted that the decrease in the ramp angle γ toward the rake face 20a, 21a can proceed continuously, that is to say in a stepless manner.

Figure 5 shows that the ramp 24, 25 ends in the region of the rake face 20a, 21a, here in the rake face 20a, 21a, of the auxiliary cutting edge 20, 21, wherein here and preferably, the end point 26 is set back axially from the auxiliary cutting edge 20, 21 by the height difference Δh. By way of a change in this offset Δh, the cutting engagement, on the one hand, and the tendency to catch, on the other hand, can, as explained above, be set precisely to the drilling environment to be expected. The expression "in the region of the rake face 20a, 21a" means here that the end point 26 does not have to be located exactly in the rake face 20a, 21a, but can, for example, also be located beneath or also to the side of the rake face 20a, 21a.

The shape of the ramp 24, 25 can be selected in a wide range. As can be seen from the illustration according to figure 5, the ramp 24, 25 is formed at least in part in a web-like manner here. With the web-like form, the sliding properties of the ramp 24, 25 can be varied. In this case, it is preferably provided that at least that part of the ramp 24, 25 that is close to the rake face is formed in a web-like manner in the above sense.

In order to reduce as far as possible the friction on account of the ramp 24, 25 and the energy losses associated therewith, it is provided in a further preferred refinement that, as seen from above, the web-like part of the ramp 24, 25 is configured in a curved, here and preferably circularly curved, manner. In this case, the web-like, circularly curved part is at best aligned with the longitudinal axis 6 of the drill bit. This, too, can be gathered from the illustration according to figure 3.

With regard to the friction that occurs, on the one hand, and the resulting concentration of force on the auxiliary cutting edge 20, 21, it should be emphasized as advantageous here that the cutting edge 20, 21 is slightly beveled at its two ends, this having been constructively implemented by the two bevels 29, 30.

In principle, all of the above-discussed cutting edges 4, 5, 8, 20, 21 can be realized on a single-piece drill head which is then configured as a solid carbide head.

Figure 4 shows that in the exemplary embodiment illustrated the main cutting edges 4, 5 and the transverse cutting edge 8 are arranged on a here and preferably single-piece cutting insert 3a, which is preferably configured as a carbide insert. The carbide insert 3a has two flat sides 27, 28, with the webs 15-18 extending as far as the flat sides 27, 28. In addition, it is provided according to figure 5 that the auxiliary cutting edges 20, 21, too, are each arranged on a single-piece cutting insert 3b, 3c, which is in turn configured as a carbide insert.

The cutting inserts 3a, 3b, 3c shown in figures 4 and 5 are each configured in a single-piece manner. In principle, a multi-piece configuration is also conceivable here.

According to a further teaching, to which independent importance is attached, the above masonry drill bit having an auxiliary cutting edge 20, 21 is claimed as such, without the realization of the first-mentioned teaching, specifically the realization of a transverse cutting edge 8 having webs 15-18, coming into question. In this respect, reference may be made to all the above embodiments.

According to a further teaching, to which likewise independent importance is attached, a cutting insert 3b, 3c, illustrated in figure 5, having a ramp 24, 25 is claimed as such. Again, in order to explain this further teaching, reference may be made to all the above embodiments.

## Claims

1. A masonry drill bit having a shank (1) having an insertion end (2) and a drill head (3), wherein the drill head (3) has two main cutting edges (4, 5) which extend on both sides of the longitudinal axis (6) of the drill bit, preferably substantially along a main cutting axis (7), and are each formed by a leading rake face (4a, 5a) and by a trailing flank (4b, 5b) adjoining the rake face (4a, 5a), wherein the main cutting edges (4, 5) each converge toward a transverse cutting edge (8) arranged in the central region of the drill head (3), wherein the transverse cutting edge (8) is formed in a substantially concave manner as seen from the side, is bounded by two transverse cutting ends (9, 10) and has at the two transverse cutting ends (9, 10) two transverse cutting tips (11, 12) that protrude axially with regard to the longitudinal axis (6) of the drill bit, wherein the transverse cutting edge (8) is formed by two adjacent channels (13, 14) and wherein each transverse cutting tip (11, 12) is adjoined by two webs (15-18) which provide the lateral boundaries of the channels (13, 14) by forming additional edges, such that each channel (13, 14) has a leading web (16, 17) and a trailing web (15, 18),
**characterized**
**in that** the webs (15-18) extend in a substantially straight manner at least in a region close to the tips (11, 12).

2. The masonry drill bit as claimed in claim 1,
**characterized**
**in that** the channels (13, 14) extend in a substantially straight manner at least in a region close to the tips.

3. The masonry drill bit as claimed in one of the preceding claims, **characterized in that** the main cutting edges (4, 5) extend substantially along a main cutting axis (7), and **in that** the channels (13, 14) extend substantially transversely to the main cutting axis (7), and/or, that the transverse cutting tips (11, 12) are adjoined in each case by a main cutting edge (4, 5), such that a continuous cutting edge profile is produced between the two main cutting edges (4, 5) via the transverse cutting edge (8).

4. The masonry drill bit as claimed in one of the preceding claims, **characterised in that**, as seen from above, the two webs (15-18) respectively adjoining a transverse cutting tip (11, 12) extend substantially in opposite directions.

5. The masonry drill bit as claimed in one of the preceding claims, **characterized in that**, as seen from above, the two webs (15-18) of a channel (13, 14) are oriented substantially parallel to one another.

6. The masonry drill bit as claimed in one of the preceding claims, **characterized in that** the channels (13, 14) are formed in a substantially concave manner in cross section.

7. The masonry drill bit as claimed in one of the preceding claims, **characterised in that** the two webs (15-18) of a channel (13, 14) are set in relation to one another, such that the trailing web (15, 18) is located at least in part closer to the longitudinal axis (6) of the drill bit than the respectively leading web (16, 17).

8. The masonry drill bit as claimed in one of the preceding claims, **characterized in that** the trailing web (15, 18) is arranged with respect to the leading web (16, 17) of a channel (13, 14) such that the envelope of the movement of the trailing web (15, 18) is located at least in part, preferably substantially, within the envelope of the movement of the leading web (16, 17).

9. The masonry drill bit as claimed in one of the preceding claims, **characterized in that** there are provided at least two auxiliary cutting edges (20, 21), which each extend along an auxiliary cutting axis (22, 23) and which are arranged, preferably in a substantially symmetrical manner, at an angle (β) to a main cutting axis (7), preferably **in that** the angle (β) is between about 50° and about 70°.

## Patentansprüche

1. Mauerbohrspitze mit einem Schaft (1) mit einem Einführungsende (2) und einem Bohrkopf (3), wobei der Bohrkopf (3) zwei Hauptschneidkanten (4, 5) aufweist, die auf beiden Seiten der Längsachse (6) der Bohrspitze verlaufen, vorzugsweise im Wesentlichen entlang einer Hauptschneidachse (7), und beide durch eine vordere Spanfläche (4a, 5a) und durch eine hintere Flanke (4b, 5b), die an die Spanfläche (4a, 5a) angrenzt, ausgebildet sind, wobei die Hauptschneidkanten (4, 5) jede zu einer quer verlaufenden Schneidkante (8) hin konvergieren, die im zentralen Bereich des Bohrkopfs (3) angeordnet ist, wobei die schräg verlaufende Schneidkante (8) bei Betrachtung von der Seite im Wesentlichen konkav ausgebildet ist, durch zwei schräg verlaufende Schneidenden (9, 10) begrenzt ist und an den zwei schräg verlaufenden Schneidenden (9, 10) zwei schräg verlaufende Schneidspitzen (11, 12) aufweist, die axial bezüglich der Längsachse (6) der Bohrspitze vorstehen, wobei die schräg verlaufende Schneidkante (8) durch zwei benachbarte Kanäle (13, 14) ausgebildet ist, und wobei an jede schräg verlaufende Schneidspitze (11, 12) zwei Stege (15 - 18) angrenzen, die die Seitengrenzen der Kanäle (13, 14) durch Ausbilden von zusätzlichen Kanten vorsehen, sodass jeder Kanal (13, 14) einen vorderen Steg (16, 17) und einen hinteren Steg (15, 18) aufweist,
**dadurch gekennzeichnet, dass**
die Stege (15 - 18) im Wesentlichen gerade mindestens in einem Bereich nahe den Spitzen (11, 12) verlaufen.

2. Mauerbohrspitze nach Anspruch 1,
**dadurch gekennzeichnet, dass**
die Kanäle (13, 14) im Wesentlichen gerade mindestens in einem Bereich nahe den Spitzen verlaufen.

3. Mauerbohrspitze nach einem der vorhergehenden Ansprüche, **dadurch gekennzeichnet, dass** die Hauptschneidkanten (4, 5) im wesentlichen entlang einer Hauptschneidachse (7) verlaufen, und dass die Kanäle (13, 14) im Wesentlichen schräg zur Hauptschneidachse (7) verlaufen, und/oder dass an die schräg verlaufenden Schneidspitzen (11, 12) in jedem Falle eine Hauptschneidkante (4, 5) angrenzt, sodass zwischen den zwei Hauptschneidkanten (4, 5) über die schräg verlaufende Schneidkante (8) ein fortlaufendes Schneidkantenprofil erzeugt ist.

4. Mauerbohrspitze nach einem der vorhergehenden Ansprüche, **dadurch gekennzeichnet, dass** die zwei Stege (15 - 18), die jeweils an eine schräg verlaufende Schneidspitze (11, 12) angrenzen, bei Betrachtung von oben im Wesentlichen in entgegengesetzte Richtungen verlaufen.

5. Mauerbohrspitze nach einem der vorhergehenden Ansprüche, **dadurch gekennzeichnet, dass** die zwei Stege (15 - 18) eines Kanals (13, 14) bei Betrachtung von oben im Wesentlichen parallel aneinander ausgerichtet sind.

6. Mauerbohrspitze nach einem der vorhergehenden Ansprüche, **dadurch gekennzeichnet, dass** die Kanäle (13, 14) im Querschnitt im Wesentlichen konkav ausgebildet sind.

7. Mauerbohrspitze nach einem der vorhergehenden Ansprüche, **dadurch gekennzeichnet, dass** die zwei Stege (15 - 18) eines Kanals (13, 14) derart in Bezug zueinander gesetzt sind,
dass der hintere Steg (15, 18) mindestens zum Teil näher an der Längsachse (6) der Bohrspitze angeordnet ist als der jeweils vordere Steg (16, 17) .

8. Mauerbohrspitze nach einem der vorhergehenden Ansprüche, **dadurch gekennzeichnet, dass** der hintere Steg (15, 18) bezüglich des vorderen Stegs (16, 17) eines Kanals (13, 14) derart angeordnet ist, dass sich die Hüllkurve der Bewegung des hinteren Stegs (15, 18) mindestens zum Teil, vorzugsweise im Wesentlichen, innerhalb der Hüllkurve der Bewegung des vorderen Stegs (16, 17) befindet.

9. Mauerbohrspitze nach einem der vorhergehenden Ansprüche, **dadurch gekennzeichnet, dass** mindestens zwei Hilfsschneidkanten (20, 21) vorgesehen sind, die jede entlang einer Hilfsschneidachse (22, 23) verlaufen, und die, vorzugsweise symmetrisch, in einem Winkel (β) zu einer Hauptschneidachse (7) angeordnet sind, vorzugsweise dass der Winkel (β) zwischen ungefähr 50° und ungefähr 70° liegt.

## Revendications

1. Foret de maçonnerie comprenant une queue (1) présentant une extrémité d'insertion (2) et une tête de perçage (3), la tête de perçage (3) comprenant deux bords de coupe principaux (4, 5) qui s'étendent des deux côtés de l'axe longitudinal (6) du foret, de préférence sensiblement le long d'un axe de coupe principal (7), et qui sont chacun formés par une face de coupe avant (4a, 5a) et par un flanc de fuite (4b, 5b) adjacent à la face de coupe (4a, 5a), les bords de coupe principaux (4, 5) convergeant chacun vers un bord de coupe transversal (8) disposé dans la région centrale de la tête de perçage (3), le bord de coupe transversal (8) étant formé d'une manière sensiblement concave vue du côté, étant délimité par deux extrémités de coupe transversales (9, 10) et présentant aux deux extrémités de coupe transversales (9, 10) deux pointes de coupe transversales (11, 12) qui dépassent axialement par rapport à l'axe longitudinal (6) du foret, le bord de coupe transversal (8) étant formé par deux canaux adjacents (13, 14) et chaque pointe de coupe transversale (11, 12} est contiguë à deux bandes (15, 18) qui constituent les limites latérales des canaux (13, 14) en formant des bords supplémentaires, de sorte que chaque canal (13, 14) comprenne une bande d'attaque (16, 17) et une bande de fuite (15, 18),
**caractérisé**
**en ce que** les bandes (15-18) s'étendent de manière sensiblement rectiligne au moins dans une région proche des pointes (11, 12).

2. Foret de maçonnerie selon la revendication 1,
**caractérisé**
**en ce que** les canaux (13, 14) s'étendent de manière sensiblement rectiligne au moins dans une région proche des pointes.

3. Foret de maçonnerie selon l'une quelconque des revendications précédentes, **caractérisé en ce que** les bords de coupe principaux (4, 5) s'étendent sensiblement le long d'un axe de coupe principal (7), et **en ce que** les canaux (13, 14) s'étendent sensiblement transversalement à l'axe de coupe principal (7), et/ou **en ce que** les pointes de coupe transversales (11, 12) sont contiguës dans chaque cas à un bord de coupe principal (4, 5), de telle sorte qu'un profilé de coupe continu est produit entre les deux bords de coupe principaux (4, 5) à travers le bord de coupe transversal (8).

4. Foret de maçonnerie selon l'une quelconque des revendications précédentes, **caractérisé en ce que**, vu du dessus, les deux bandes (15-18), respectivement contiguës à une pointe de coupe transversale (11, 12) s'étendent sensiblement dans des directions opposées.

5. Foret de maçonnerie selon l'une quelconque des revendications précédentes, **caractérisé en ce que**, vu du dessus, les deux bandes (15-18) d'un canal (13, 14) sont orientées sensiblement parallèlement l'une à l'autre.

6. Foret de maçonnerie selon l'une quelconque des revendications précédentes, **caractérisé en ce que** les canaux (13, 14) sont formés de manière sensiblement concave en section transversale.

7. Foret de maçonnerie selon l'une quelconque des revendications précédentes, **caractérisé en ce que** les deux bandes (15-18) d'un canal (13, 14) sont mises en relation l'une par rapport à l'autre,
de telle sorte que la bande de fuite (15, 18) est située au moins en partie plus près de l'axe longitudinal (5) du foret que la bande d'attaque (16, 17).

8. Foret de maçonnerie selon l'une quelconque des revendications précédentes, **caractérisé en ce que** la bande de fuite (15, 18) est disposée par rapport à la bande d'attaque (16, 17) d'un canal (13, 14) de telle sorte que l'enveloppe du mouvement de la bande de queue (15, 18) est située au moins en partie, de préférence sensiblement, à l'intérieur de l'enveloppe du mouvement de la bande d'attaque (16, 17).

9. Foret de maçonnerie selon l'une quelconque des revendications précédentes, **caractérisé en ce qu'**il est prévu au moins deux bords de coupe auxiliaires (20, 21) qui s'étendent chacun le long d'un axe de coupe auxiliaire (22, 23) et qui sont disposés, de préférence de manière sensiblement symétrique, selon un angle (β) par rapport à un axe de coupe principal (7), de préférence **en ce que** l'angle (β) est compris entre environ 50° et environ 70°.
